# EUROPÄISCHE PATENTANMELDUNG

(11) **EP 2 728 375 A1**
(43) Veröffentlichungstag der Anmeldung: **07.05.2014**
(21) Anmeldenummer: 12190873.5
(22) Anmeldetag: 31.10.2012
(51) Int. Cl.: G01S 7/497, G01S 17/02, G01S 5/16

(54) **Verfahren und Vorrichtung zur Bestimmung einer Orientierung eines Objekts**

(71) Anmelder: Leica Geosystems AG, 9435 Heerbrugg (CH)
(72) Erfinder: Christen, Andreas, 5018 Erlinsbach (CH); Wildi, Konrad, 5035 Unterentfelden (CH); Markendorf, Albert, 5046 Walde (CH)
(74) Vertreter: Gyaja, Christoph Benjamin

(57) **Zusammenfassung**

Die Erfindung betrifft ein Verfahren zum Bestimmen einer räumlichen Orientierung eines Lichtpunkte bereitstellende Referenzmerkmale (52,52a) aufweisenden Messhilfsobjekts (50) für einen Lasertracker. Der Tracker weist eine Basis, eine motorisiert schwenkbaren Stütze, eine um eine Kippachse motorisiert drehbare Schwenkeinheit mit einer Bilderfassungseinheit zum Erfassen eines Bildes der Lichtpunkte und eine Strahlquelle zur Emission eines Laserstrahls auf. Im Rahmen des Verfahrens werden ein Bild in Richtung des Messhilfsobjekts (50) mit jeweils erfassbaren Lichtpunkten erfasst und die räumliche Orientierung des Messhilfsobjekts (50) aus Bildpositionen im Bild für die im Bild erfassten Lichtpunkte mittels Bildauswerten abgeleitet. Ferner ist ein lokales Berücksichtigungskriterium für das Bildauswerten hinsichtlich eines Erscheinens eines einzelnen Lichtpunkts im Bild definiert oder ein globales Berücksichtigungskriterium für das Bildauswerten hinsichtlich einer räumlichen Beziehung zwischen einer Anzahl von Lichtpunkten im Bild definiert. Es erfolgt ein Überprüfen eines Erfüllens des Berücksichtigungskriteriums für mindestens einen der im Bild erfassten Lichtpunkte dadurch, dass ein Vergleichen einer durch das erfasste Bild vorliegenden Bildinformation für den Lichtpunkt mit dem Berücksichtigungskriterium erfolgt. Bei einem Nicht-Erfüllen des Berücksichtigungskriteriums wird der Lichtpunkt für das Ableiten der räumlichen Orientierung nicht berücksichtigt.

## Beschreibung

Die Erfindung betrifft ein Verfahren zur Bestimmung einer Orientierung eines Objekts für und mit einem Lasertracker nach dem Oberbegriff des Anspruchs 1, einen Lasertracker mit einer entsprechenden Funktionalität gemäss Anspruch 11 und ein Computerprogrammprodukt nach Anspruch 15.

Messgeräte, die für eine fortlaufende Verfolgung eines Zielpunkts und eine koordinative Positionsbestimmung dieses Punkts ausgebildet sind, können allgemein, insbesondere im Zusammenhang mit industrieller Vermessung, unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zum Messgerät reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung oder mittels des Fizeau-Prinzips ermittelt.

In modernen Trackersystemen wird zudem - zunehmend standardisiert - auf einem Sensor eine Ablage des empfangenen Messlaserstrahls von einem so genannten Servokontrollpunkt ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Trackersystem bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der beschriebenen Zielverfolgung muss ein Ankoppeln des Laserstrahls an den Reflektor vorausgehen. Hierzu kann am Tracker zusätzlich eine Erfassungseinheit mit einem positionssensitiven Sensor und mit einem verhältnismässig grossen Sichtfeld angeordnet sein. Zudem sind in gattungsgemässe Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder gänzlich zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 A1 bekannt. In Abhängigkeit der so ableitbaren Richtungsinformation kann die Ausrichtung des Messlaserstrahls derart verändert werden, dass ein Abstand zwischen dem Laserstrahl und dem Reflektor, an welchen der Laserstrahl angekoppelt werden soll, verkleinert wird.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt. Ferner ist eine Kombination eines Absolutdistanzmessers und eines Interferometers zur Entfernungsbestimmung mit einem HeNe-Laser beispielsweise aus der WO 2007/079600 A1 bekannt.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments bzw. Messhilfsobjekts mit Markierungen, deren relative Lagen zueinander bekannt sind, kann auf eine Orientierung des Instruments und eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden (6DoF-Bestimmung: Bestimmung von sechs Freiheitsgraden).

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Leuchtdioden (LEDs), und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsobjekt kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Leuchtdioden und Reflektoren, die auf dem Scanner angeordnet sind, genau bekannt sind. Ein derartiger Scanner ist beispielsweise in der EP 0 553 266 beschrieben.

Für eine zuverlässige Bestimmung der räumlichen Orientierung (6DoF-Messung) des Messhilfsobjekts mit einem Lasertracker wird ein Bild mit den erfassten und gut (d.h. insbesondere vollständig) abgebildeten Leuchtdioden und vorzugsweise eine bekannte Anordnung der Leuchtdioden am Objekt herangezogen. Mittels Bildauswerten kann daraus die Orientierung des Messhilfsobjekts im Raum abgeleitet werden.

Bei einer solchen 6DoF-Messung wird mit Hilfe der bekannten Geometrie und mit Kenntnis der inneren Orientierung der Kamera ein räumlicher Rückwärtsschnitt berechnet und daraus die Orientierung des Messhilfsobjekts bestimmt. Das Ergebnis des räumlichen Rückwärtsschnitts jedoch wird ungenauer (d.h. eine zufällige Messunsicherheit nimmt zu), wenn einzelne LEDs für die Kamera zumindest teilweise nicht sichtbar sind.

Ein besonders ungünstiger Fall tritt ein, wenn eine oder mehrere der LEDs teilweise verdeckt sind, sodass eine berechnete Bildkoordinate im erfassten Bild für einen Lichtpunkt einer jeweiligen LED systematisch verfälscht wird. Mit der Verfälschung einzelner Bildkoordinaten wird in der Folge das Ergebnis des Rückwärtsschnitts und somit die Bestimmung der räumlichen Orientierung des Messhilfsobjekts systematisch verfälscht.

Es ist daher Aufgabe der vorliegenden Erfindung ein verbessertes Verfahren bzw. eine verbesserte Vorrichtung zur Verringerung bzw. Vermeidung von oben genannten Messfehlern bereitzustellen.

Eine spezielle Aufgabe der vorliegenden Erfindung ist die Bereitstellung eines verbesserten Lasertrackers zur zuverlässigeren Orientierungsbestimmung eines Objekts mittels Auswertung von in einem Bild erfassten Lichtpunkten für das Objekt, insbesondere wobei ein bei zumindest teilweise verdeckten Lichtpunkten auftretender Messfehler verringert bzw. ausgeschlossen wird.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zum Bestimmen einer räumlichen Orientierung eines in definierter räumlicher Beziehung angebrachte und Lichtpunkte bereitstellende Referenzmerkmale aufweisenden Messhilfsobjekts für und mit einem Lasertracker. Der Lasertracker weist eine eine Stehachse definierende Basis, eine relativ zur Basis um die Stehachse motorisiert schwenkbare Stütze, eine relativ zur Stütze um eine Kippachse motorisiert drehbare Schwenkeinheit mit einer Bilderfassungseinheit zum Erfassen eines Bildes der Lichtpunkte und eine Strahlquelle zur Emission eines Laserstrahls auf. Zudem sind eine Entfernungsmesseinheit zum Distanzmessen zum Messhilfsobjekt vermittels des Laserstrahls und eine Winkelmessfunktionalität zum Bestimmen einer Emissionsrichtung des Laserstrahls relativ zur Basis vorgesehen.

Im Rahmen des erfindungsgemässen Verfahrens wird ein Bild in Richtung des Messhilfsobjekts mit jeweils in Abhängigkeit von zumindest einer Position und/oder von einer Ausrichtung des Messhilfsobjekts erfassbaren Lichtpunkten erfasst und die räumliche Orientierung des Messhilfsobjekts aus Bildpositionen im Bild für die im Bild erfassten Lichtpunkte mittels Bildauswerten abgeleitet.

Erfindungsgemäss ist ein lokales Berücksichtigungskriterium bezüglich eines Aussehens eines einzelnen Lichtpunkts im Bild für das Bildauswerten definiert oder ein globales Berücksichtigungskriterium hinsichtlich einer positionellen Beziehung zwischen einer Anzahl von Lichtpunkten im Bild für das Bildauswerten definiert. Zudem erfolgt ein Überprüfen eines Erfüllens des lokalen bzw. globalen Berücksichtigungskriteriums für mindestens einen der im Bild erfassten Lichtpunkte (insbesondere durch ein Vergleichen einer durch das erfasste Bild vorliegenden Bildinformation für den mindestens einen der erfassten Lichtpunkte mit dem lokalen bzw. globalen Berücksichtigungskriterium). Bei einem Nicht-Erfüllen des (lokalen bzw. globalen) Berücksichtigungskriteriums wird der mindestens eine der im Bild erfassten Lichtpunkte für das Ableiten der räumlichen Orientierung reduziert gewichtet, insbesondere ausgeschlossen.

D.h. es wird überprüft, ob die im Bild vorliegenden Eigenschaften für einen oder mehreren Lichtpunkte mit Solleigenschaften für einen oder mehreren Lichtpunkten übereinstimmen und basierend auf dieser Überprüfung ein Berücksichtigen bzw. reduziertes Gewichten, im Speziellen ein Nicht-Berücksichtigen, des Lichtpunkts für die Orientierungsbestimmung beschlossen.

Die Referenzmerkmale können insbesondere als Leuchtdioden (LEDs) zur Emission von Licht in einem bestimmten Wellenlängenbereich ausgebildet sein, insbesondere zur Emission von infrarotem Licht.

Entsprechend einer bestimmten, erfindungsgemässen Ausführung des Verfahrens definiert das lokale Berücksichtigungskriterium zumindest ein Bildattribut für das Erscheinen mindestens des einen der Lichtpunkte im Bild, insbesondere eine Sollform und/oder räumliche Sollausdehnung und/oder eine Sollhelligkeitsverteilung und/oder eine Sollsummenintensität und/oder einen Sollkontrast als Bildreferenz definiert.

In diesem Zusammenhang wird gemäss einer typischen erfindungsgemässen Ausführungsform das Überprüfen des Erfüllens des lokalen Berücksichtigungskriteriums basierend auf einer individuellen Betrachtung von (einzelnen) LED-Abbildern (bzw. Abbildern der Referenzmerkmale) im Bild durchgeführt. Hierfür ist keine Kenntnis einer relativen räumlichen Anordnung der LEDs am Messhilfsobjekt notwendig.

Zur Identifikation einer teilweise abgedeckten LED wird dabei die Abweichung des Abbilds zu einer Referenz bzw. Norm (= Berücksichtigungskriterium) verwendet. Als Referenz bzw. Norm können entweder aus einer Optikrechnung erhaltene ideale Abbildungen oder Erfahrungswerte für vorgesehene Referenzmerkmale dienen.

Das Verfahren gemäss dieser Ausführungsform ist unabhängig von der Gesamtzahl der abgebildeten LEDs im Bild und ist somit für eine einzelne LED anwendbar. Zudem werden keine Kenntnisse über die Orientierung der Kamera benötigt. Insbesondere können in diesem Zusammenhang für mögliche Abstände zwischen Messhilfsobjekt (z.B. Messtaster) und Kamera, sowie für denkbare Orientierungen von Messhilfsobjekt relativ zur Kamera, die idealen Abbildungen hinterlegt sein, wobei diese insbesondere aus realen Beobachtungen ermittelte "Erfahrungswerte" darstellen können.

Im Speziellen ist das Abbild einer LED im Bild dabei durch die Bildattribute gekennzeichnet, wie z.B. Anzahl der Pixel, maximale Helligkeit (hellstes Pixel), Summenintensität (Summe aller Grauwerte), Form und/oder Umriss (z.B. basierend auf der Form der aktiven Fläche einer LED bzw. der Kontur einer passiven Zielmarke und Optikrechnung), Helligkeitsverteilung innerhalb des Abbilds (monochrom bzw. spektral) und/oder Bildschärfe. Weicht eines oder mehrere der Attribute von den Referenz- bzw. Normwerten ab, kann dies erkannt werden und ein Indikator für die teilweise Verdeckung der jeweiligen LED sein.

Insbesondere kann hinsichtlich der Bewertung der Helligkeitsverteilung für einen Lichtpunkt einer LED im Bild die Bildkoordinate für dieses Abbild der LED mehrmals berechnet werden, wobei einzelne Parameter verändert werden und die Abweichungen innerhalb der Gruppe von so entstandenen Bildkoordinaten als Kriterium für eine Abweichung von der erwarteten Helligkeitsverteilung verwendet werden.

Die dafür variierbaren Parameter sind beispielsweise ein Helligkeitsschwellwert (Threshold), eine Dunkelbild-Subtraktion (Offset), eine Methode der Schwerpunktsberechnung (z.B. binärer, linearer oder quadratischer Schwerpunkt), eine Belichtungszeit und/oder eine Schwerpunktsberechnung nach einzelnen Pixelfarben getrennt voneinander.

Bezüglich der Definition bzw. Festlegung des globalen oder lokalen Berücksichtigungskriteriums kann dieses Berücksichtigungskriterium - alternativ oder zusätzlich zum Vorliegen des Kriteriums in einer Datenbank des Lasertrackers - erfindungsgemäss insbesondere aus dem erfassten Bild abgeleitet werden, insbesondere aus jeweiligen grafischen Abbildungen der Lichtpunkte im Bild, insbesondere aus einem Vergleich der jeweiligen grafischen Abbildungen der Lichtpunkte.

In diesem Zusammenhang befasst sich eine weitere erfindungsgemässe Ausführungsform für die Überprüfung, ob ein Referenzmerkmal bei der Bilderfassung teilweise verdeckt vorlag, mit einem Vergleich der Abbilder aller im Bild erfassten Referenzmerkmale (= Lichtpunkte im Bild). Dabei wird die Abbildung eines einzelnen Referenzmerkmals im erfassten Bild mit den in der gleichen Aufnahme entstandenen Abbildern der ebenfalls im Bild erfassten Referenzmerkmale verglichen. Dies kann insbesondere bei nicht berücksichtigbaren (z.B. wegen Schwankungsbreite aufgrund von Fertigungstoleranzen, Bewegungsunschärfe, Störungen durch Atmosphäre etc.) oder nicht hinterlegten Referenzwerten für das Referenzmerkmal erfolgen. Je grösser dabei die Anzahl der abgebildeten Referenzmerkmale ist und je weniger davon teilweise verdeckt sind, desto zuverlässiger ist diese Methode anwendbar. Ferner ist Voraussetzung hierfür, dass die erfassten Referenzmerkmale im Wesentlichen gleichartig ausgebildet sind bzw. eine gleichartige Reflexionseigenschaft (für passive Referenzmerkmale wie retro-reflektierende Folien) oder gleichartige Lichtemission (für aktive Referenzmerkmale wie Leuchtdioden) aufweisen.

Im Speziellen basiert dieses Verfahren auf dem gleichen Prinzip wie das vorangehend beschriebene Verfahren. Es können die gleichen Bildattribute und Berechnungsmethoden herangezogen werden. Der Unterschied besteht hauptsächlich darin, dass keine absoluten Referenz- oder Normwerte für das Abbild einer LED im Bild existieren, sondern alle in der gleichen Aufnahme entstandenen Abbilder von LEDs miteinander vergleichen werden.

Zur Reduzierung des Rechenaufwands können die Lichtpunkte der LEDs im Bild zunächst gemäss eines oder mehrerer gewählten Bildattribute sortiert werden, z.B. nach Anzahl der Pixel, und nur z.B. ein erster und/oder ein zweiter Lichtpunkt auf einer so generierten Liste auf eine mögliche teilweise Abdeckung geprüft werden.

Ferner kann das globale Berücksichtigungskriterium gemäss einer weiteren Ausführungsform erfindungsgemäss eine relative räumliche Sollpositionierung der Bildpositionen im Bild für die Anzahl der im Bild erfassten Lichtpunkte definieren, insbesondere unter Berücksichtigung von einer jeweiligen Orientierung des Messhilfsobjekts.

Ein weiterer Aspekt der Erfindung hinsichtlich des Überprüfens des Erfüllens des globalen bzw. lokalen Berücksichtigungskriteriums betrifft ein zeitlich versetztes Erfassen von mindestens einem weiteren Bild mit den Lichtpunkten, insbesondere fortlaufend von (mehreren) weiteren Bildern. Das Überprüfen des Erfüllens des lokalen bzw. globalen Berücksichtigungskriteriums für mindestens den einen in den Bildern erfassten Lichtpunkt erfolgt hierbei durch ein Vergleichen der Bilder, insbesondere durch ein Vergleichen des Aussehens des einzelnen Lichtpunkts in den Bildern bzw. durch ein Vergleichen der jeweiligen Bildposition für den einzelnen Lichtpunkt in den Bildern. Dadurch kann somit der Zustand des Lichtpunkts überwacht bzw. verfolgt werden und daraus eine z.B. entstehende Verdeckung des Punktes erkannt werden.

Mit anderen Worten heisst dies, dass eine zeitliche Abfolge (d.h. eine Serie) von Bildern erfasst wird (wobei die Bilder im Wesentlichen jeweils die gleichen in den Bildern abgebildeten Referenzmerkmale als Lichtpunkte aufweisen) und beispielsweise ein gemeinsamer Lichtpunkt in den erfassten Bildern verglichen wird und dessen zeitliche Entwicklung bestimmt wird. Aus dieser Betrachtung kann dann auf eine Veränderung des Lichtpunkts in den Bildern geschlossen werden und basierend darauf z.B. eine auftretende (teilweise) Verdeckung des Lichtpunkts erkannt werden. Diese kann zum einen erkennbar sein durch eine Änderung des Aussehens (z.B. der Form oder Helligkeit) des entsprechenden Lichtpunkts oder durch eine Veränderung der Bildposition für den Lichtpunkt.

In diesem Zusammenhang kann somit ein einzelnes Bild oder eine Bildfolge (in deren Rahmen z.B. der relevante Lichtpunkt unverändert erfasst ist) zur Definition des Berücksichtigungskriteriums herangezogen werden und ein nachfolgendes Bild (bzw. ein Lichtpunkt des Bildes) basierend auf diesem definierten Berücksichtigungskriterium bewertet werden.

Ausserdem kann gemäss einer weiteren spezifischen Ausführungsform der Erfindung für das Überprüfen des Erfüllens des lokalen Berücksichtigungskriteriums eine grafische Information für den mindestens einen der im Bild erfassten Lichtpunkte aus dem Bild abgeleitet werden, insbesondere eine für den Lichtpunkt im Bild erfasste Istform und/oder räumliche Istausdehnung und/oder eine Isthelligkeitsverteilung und/oder eine Istsummenintensität und/oder einen Istkontrast. Alternativ oder zusätzlich kann - ebenfalls erfindungsgemäss - für das Überprüfen des Erfüllens des globalen Berücksichtigungskriteriums eine mittels Bildverarbeiten bestimmte Bildposition für den mindestens einen der im Bild erfassten Lichtpunkte im Bild herangezogen werden, insbesondere wobei die Bildposition mittels Schwerpunktsberechnung im Bild basierend auf einer Helligkeitsverteilung bestimmt wird.

Insbesondere kann im Rahmen des erfindungsgemässen Verfahrens bei dem Überprüfen des Erfüllens des lokalen bzw. globalen Berücksichtigungskriteriums eine räumliche Struktur des Messhilfsobjekts und/oder eines Messraums sowie insbesondere eine Position des Messhilfsobjekts berücksichtigt werden, insbesondere wobei eine Position und Dimensionierung eines Sichthindernisses berücksichtigt werden.

Bei der erfindungsgemässen Überprüfung der im Bild abgebildeten LEDs, also bei der Überprüfung der durch die LEDs erzeugten Lichtpunkte im Bild, können somit gemäss einer speziellen Ausführungsform bei der Identifikation von teilweise abgedeckten LEDs bekannte räumliche Strukturen z.B. des Messhilfsobjekts oder des Messraums berücksichtigt werden.

Hierfür sind neben der relativen räumlichen Anordnung der LEDs auch eine Form und räumliche Lage von Strukturen im Messvolumen, die zu einer teilweisen Abdeckung von zumindest einer LED führen können, bekannt, wodurch berechnet werden kann, wann eine LED eventuell nicht mehr vollständig auf dem Bildsensor abgebildet sein könnte und diese aus der Berechnung des Rückwärtsschnitts präventiv ausgeschlossen wird.

Zu solchen Strukturen, die häufig zur teilweisen Abdeckung führen können, sind z.B. das Gehäuse des Messhilfsobjekts selbst, Teile von Vorrichtungen und Werkzeugen, Gebäude und/oder Sicherheitseinrichtungen (und/oder auch Personen) zu zählen, wobei die 6DoF-Messung (Position und Orientierung des Messhilfsobjekts) zudem jederzeit deren aktuelle relative räumliche Lage zur Kamera bereitstellt.

Befindet sich eine LED in der Nähe, d.h. innerhalb eines vordefinierten Abstands zu einer bekannten Struktur, kann das Abbild dieser LED präventiv von der Berechnung des Rückwärtsschnitts ausgeschlossen werden, auch wenn eventuell noch keine Abdeckung vorliegt. Ausserdem können bei immer wiederkehrenden Messabläufen, z.B. in der Automation, Raumbereiche, innerhalb derer eine LED teilweise abgedeckt sein könnte, in einen Probelauf ermittelt und für eine entsprechende Messung berücksichtigt werden.

Erfindungsgemäss kann insbesondere aus dem Überprüfen des Erfüllens des lokalen bzw. globalen Berücksichtigungskriteriums eine zumindest teilweise Verdeckung für mindestens den einen der im Bild erfassten Lichtpunkte bestimmt werden, wobei bei Vorliegen einer teilweisen Verdeckung des Lichtpunkts dieser Lichtpunkt für das Ableiten der räumlichen Orientierung reduziert gewichtet wird.

Weiters kann gemäss einer weiteren spezifischen Ausführungsform für das Überprüfen des Erfüllens des lokalen bzw. globalen Berücksichtigungskriteriums ein einen Übereinstimmungsgrad von Berücksichtigungskriterium und einer Bildinformation angebender Vergleichsgütewert ermittelt werden und für den Vergleichsgütewert ein Vertrauensbereich definiert sein, wobei die Bildinformation für mindestens den ersten Lichtpunkt aus dem erfassten Bild abgeleitet wird.

Bei einem Vorliegen eines aktuell bestimmten Vergleichsgütewerts im Rahmen des Überprüfens des Erfüllens des lokalen bzw. globalen Berücksichtigungskriteriums für den mindestens einen der erfassten Lichtpunkte innerhalb des Vertrauensbereichs kann im Speziellen ein Berücksichtigen und bei einem Vorliegen des bestimmten Vergleichsgütewerts ausserhalb des Vertrauensbereichs ein reduziertes Gewichten des Lichtpunkts für das Ableiten der räumlichen Orientierung erfolgen.

Zusätzlich kann erfindungsgemäss insbesondere bei dem Überprüfen des Erfüllens des lokalen bzw. globalen Berücksichtigungskriteriums für jeden der im Bild erfassten Lichtpunkte ein individuelles Residuum bestimmt werden und überprüft werden, ob die jeweiligen Residuen innerhalb eines einstellbaren Erwartungsbereichs liegen, wobei bei Vorliegen eines oder mehrerer Residuen ausserhalb des Erwartungsbereichs der bzw. die korrespondierenden Lichtpunkte für das Ermitteln des Vergleichsgütewert reduziert gewichtet werden, insbesondere für das Ableiten der räumlichen Orientierung ausgeschlossen werden.

Gemäss einer speziellen erfindungsgemässen Ausführungsform des Verfahrens können zur Ausführung des Verfahrens zusätzliche Hilfs-Markierungen relativ zu Mess-Referenzmerkmalen am Messhilfsobjekt angeordnet sein. Durch eine geschickte Anordnung von diesen zusätzlichen, für die eigentlich Messung nicht unbedingt erforderlichen Hilfs-Markierungen (die - wie auch die Mess-Referenzmerkmale - als LEDs oder retro-reflektierend ausgebildet sein können) um die eigentlichen Mess-Merkmale herum, kann detektiert werden, ob z.B. eine Mess-LED eventuell nicht mehr vollständig im Bild abgebildet sein könnte.

Ein Mess-Referenzmerkmal bildet mit den Hilfs-Markierungen einen Verbund bzw. eine Gruppe (Cluster). Wird diese Gruppe nicht mehr vollständig auf dem Bildsensor abgebildet, d.h. fehlt eine oder mehrere der zusätzlichen Hilfs-Markierungen, besteht das Risiko, dass das zentrale Mess-Referenzmerkmal nicht mehr vollständig abgebildet ist. Für diesen Fall kann das jeweilige Mess-Referenzmerkmal von der weiteren Berechnung eines Rückwärtsschnitts präventiv ausgeschlossen werden.

Da die zusätzlichen Hilfs-Markierungen im Wesentlichen zur Detektion einer möglicherweise teilweisen Verdeckung der zentralen Mess-Referenzmerkmale verwendet werden und ansonsten nicht in die weitere Berechnung einfliessen, haben sie keinen Einfluss auf die Qualität des Messergebnisses. Die Anforderungen an diese Zusatzmarkierungen sind daher im Vergleich zu den Mess-Referenzmerkmalen entsprechend geringer (Helligkeit, Grösse, Homogenität der Ausleuchtung etc.), was die Anwendung des Verfahrens insbesondere auch bei LEDbasierten Messsystemen erlaubt.

Eine geeignete Form für die Hilfs-Zusatzmarkierung ist ein Ring um das eigentliche Mess-Referenzmerkmal z.B. aus retro-reflektierender Folie oder aus neben einander liegenden LEDs. Eine weitere geeignete Alternative ist die Anordnung mehrerer separater Markierungen, die auch separat auf dem Bildsensor abgebildet werden. Hierbei muss für die Detektion beispielsweise nur gezählt werden, ob alle Zusatzmarkierungen in einem vorgegebenen Bereich um das Mess-Referenzmerkmale auf dem Bildsensor erscheinen.

Als alternative oder zusätzliche erfindungsgemässe Ausführungsform können weitere Berechnungen des Rückwärtsschnitts (Orientierungsbestimmung des Messhilfsobjekts) durchgeführt werden, indem jeweils bestimmte LEDs bzw. Lichtpunkte im Bild nicht berücksichtigt werden und dabei erkannt wird, ob sich eine relevante Qualitätskennzahl (z.B. eine Standardabweichung für die Bildkoordinaten) signifikant verbessert und dadurch z.B. in einem vordefinierten Erwartungsbereich liegt. Mittels dieser Qualitätskennzahl wird erkennbar, ob ein Lichtpunkt für eine LED einen signifikanten (Fehler verursachenden) Einfluss auf das Messergebnis hat. Eine solche Ausführungsform ist insbesondere der Überprüfung des globalen Berücksichtigungskriteriums zuzuordnen, wobei als Kriterium z.B. eine relative Standardabweichung oder ein relativer Unterschied der Qualitätskennzahl oder ein relativer Unterschied von einzelnen (oder mehreren) Standardabweichungen definiert ist.

Hierbei können beispielsweise nacheinander einzelne der erfassten Lichtpunkte bei der Berechnung ausgeschlossen werden und zu jeder Berechnung die Qualitätskennzahl bestimmt werden, indem bei jeder Berechnung ein "Best-Fit" mit einer bekannten Verteilung der Lichtpunkte am Messhilfsobjekt erfolgt und dabei jeweils eine Standardabweichung bestimmt wird oder indem die Orientierung des Messhilfsobjekt mit Orientierungswinkeln bestimmt wird und z.B. für jede Winkelberechnung eine jeweilige Standardabweichung bestimmt wird. Durch einen Vergleich der Standardabweichungen können daraus diejenigen Lichtpunkte identifiziert werden, die nicht korrekt im Bild abgebildet sind. Insbesondere kann hierbei derjenige Lichtpunkt als unkorrekt identifiziert werden, welcher bei der Berechnung mit der kleinsten Gesamtstandardabweichung bzw. mit der grössten Verbesserung der Standardabweichung ausgeschlossen wurde. Wird insbesondere bei jedem "Weglassen" eines Lichtpunkts (im Rahmen der "Best-Fit" Methode) für jeden noch gefitteten Punkt eine Standardabweichung bestimmt, so kann beispielsweise derjenige Lichtpunkt als "schlecht" identifiziert werden, der bei jener Berechnung mit der kleinsten Gesamtstandardabweichung bzw. mit der grössten Verbesserung der Standardabweichung ausgeschlossen wurde.

Je nach Anzahl der LEDs, der zur Verfügung stehenden Berechnungszeit, der Rechenleistung und/oder den Anforderungen an die Echtzeitausgabe der Messergebnisse, können die Lichtpunkte der LEDs bzgl. einer Wahrscheinlichkeit einer teilweisen Abdeckung sortiert oder klassifiziert und abgearbeitet werden, z.B. mit kleinster Summenintensität beginnend.

Die Erfindung betrifft ausserdem einen Lasertracker zur Positions- und/oder Ausrichtungsbestimmung eines in definierter räumlicher Beziehung angebrachte und Lichtpunkte bereitstellende Referenzmerkmale aufweisenden Messhilfsobjekts und insbesondere zur fortlaufenden Verfolgung des Messhilfsobjekts. Der Tracker weist eine eine Stehachse definierende Basis, eine relativ zur Basis um die Stehachse motorisiert schwenkbare Stütze, eine relativ zur Stütze um eine Kippachse motorisiert drehbare Schwenkeinheit mit einer Bilderfassungseinheit zur Erfassung eines Bildes der Lichtpunkte und eine Strahlquelle zur Emission eines Laserstrahls auf. Zudem sind eine Entfernungsmesseinheit zur Distanzmessung zum Messhilfsobjekt vermittels des Laserstrahls, eine Winkelmessfunktionalität zur Bestimmung einer Emissionsrichtung des Laserstrahls relativ zur Basis und eine Steuerungs- und Verarbeitungseinheit mit einer Funktionalität zum Bestimmen einer räumlichen Orientierung des Messhilfsobjekts vorgesehen. Bei Ausführung der Funktionalität wird die räumliche Orientierung des Messhilfsobjekts aus Bildpositionen im Bild für im Bild erfasste Lichtpunkte mittels Bildauswertung abgeleitet, wobei gesteuert durch die Steuerungs- und Verarbeitungseinheit das Bild in Richtung des Messhilfsobjekts mit jeweils in Abhängigkeit von zumindest einer Position und/oder von einer Ausrichtung des Messhilfsobjekts erfassbaren Lichtpunkten erfasst ist.

Erfindungsgemäss ist ein lokales Berücksichtigungskriterium bezüglich eines Aussehens eines einzelnen Lichtpunkts im Bild für die Bildauswertung definiert oder ein globales Berücksichtigungskriterium hinsichtlich einer positionellen Beziehung zwischen einer Anzahl von Lichtpunkten im Bild für die Bildauswertung definiert. Zudem weist die Steuerungs- und Verarbeitungseinheit eine Überprüfungsfunktionalität auf, bei deren Ausführung für mindestens einen der im Bild erfassten Lichtpunkte ein Überprüfen eines Erfüllens des Berücksichtigungskriteriums erfolgt (insbesondere durch dass Vergleichen einer durch das erfasste Bild vorliegenden Bildinformation für den mindestens einen der erfassten Lichtpunkte mit dem Berücksichtigungskriterium). Bei einem Nicht-Erfüllen des Berücksichtigungskriteriums wird der mindestens eine der im Bild erfassten Lichtpunkte bei Ausführung der Funktionalität für das Ableiten der räumlichen Orientierung reduziert gewichtet, insbesondere ausgeschlossen.

Die Steuerungs- und Verarbeitungseinheit des Lasertrackers kann erfindungsgemäss insbesondere zur Ausführung eines oben beschriebenen erfindungsgemässen Verfahrens ausgebildet sein.

Hinsichtlich der Ausgestaltung des Messhilfsobjekts können erfindungsgemäss zusätzliche Hilfsmarkierungen an dem Messhilfsobjekt angeordnet sein, die in einer definierten räumlichen Beziehung zu einem der Referenzmerkmale positioniert sind, wobei bei Ausführung der Überprüfungsfunktionalität Abbilder der Hilfsmarkierungen in einem erfassten Bild hinsichtlich des Erfüllens des lokalen bzw. globalen Berücksichtigungskriteriums überprüft werden.

Die Referenzmerkmale des Messhilfsobjekts sind insbesondere als selbstleuchtende Mittel, die die Lichtpunkte bereitstellen, ausgebildet, insbesondere als Leuchtdioden.

Ein weiterer Aspekt der Erfindung betrifft ein Computerprogrammprodukt zur Steuerung des Bilderfassens in Richtung des Messhilfsobjekts und zur Ausführung des Bestimmens der räumlichen Orientierung des Messhilfsobjekts und des Überprüfens des Erfüllens des Berücksichtigungskriteriums gemäss einem erfindungsgemässen Verfahren, wobei das Computerprogrammprodukt auf einem maschinenlesbaren Träger gespeichert ist, insbesondere wenn das Computerprogrammprodukt auf einer Steuerungs- und Verarbeitungseinheit eines erfindungsgemässen Lasertrackers ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: zwei Ausführungsformen für erfindungsgemässe Lasertracker;
- Fig.2a-b: zeigen ein Messhilfsobjekt und ein erfasstes Bild mit Lichtpunkten, die durch LEDs am Messhilfsobjekt bereitgestellt sind;
- Fig.3a-c: zeigen ein Messhilfsobjekt, ein erfasstes Bild mit Lichtpunkten, die durch die LEDs am Messhilfsobjekt bereitgestellt sind, und ein Bild mit ermittelten Bildpositionen für die Lichtpunkte;
- Fig.4a-b: zeigen ein Messhilfsobjekt mit einem Sichthindernis und ein erfasstes Bild mit Lichtpunkten, die durch die LEDs am Messhilfsobjekt und das Sichthindernis bereitgestellt bzw. teil-verdeckt sind;
- Fig.5a-b: zeigen ein Messhilfsobjekt in einer seitlichen Ausrichtung relativ zu einer Kamera und ein erfasstes Bild korrespondierend zu diesem seitlich ausgerichteten Messhilfsobjekt;
- Fig.6a-b: zeigen jeweils einen Konturplot für eine Helligkeitsverteilung des Abbildes einer quadratischen LED - unverdeckt und teilweise verdeckt;
- Fig.7: zeigt eine erste erfindungsgemässe Ausführungsform für eine Messzielmarke bzw. eine Mess-LED mit einer Hilfsmarkierung zur Detektion einer potentiellen teilweisen Abdeckung der LED; und
- Fig.8: zeigt eine zweite erfindungsgemässe Ausführungsform für Hilfsmarkierungen bzw. Hilfs-LEDs zur Detektion einer potentiellen teilweisen Abdeckung einer Mess-LED.

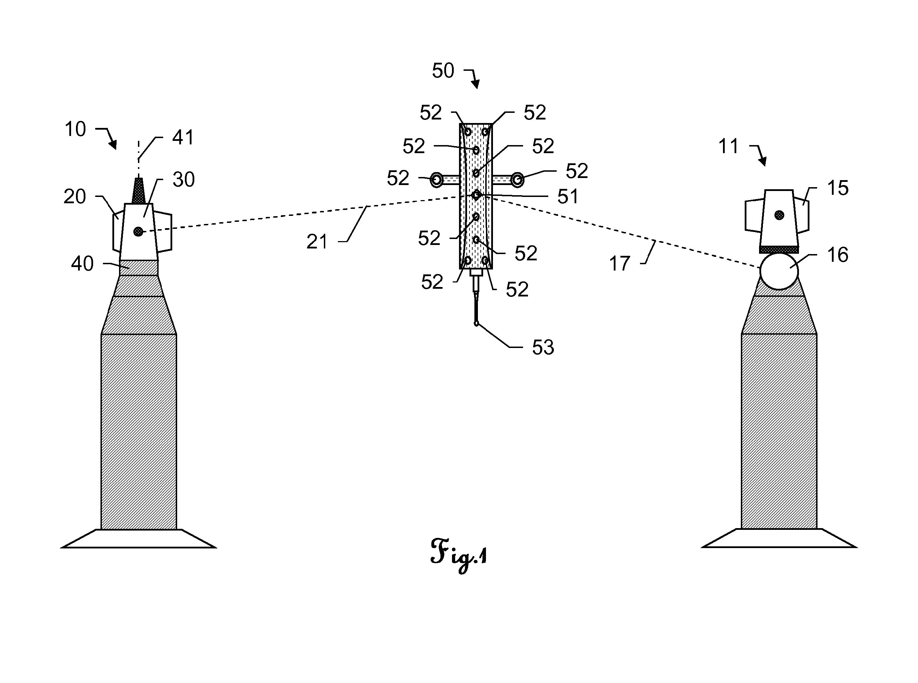

Fig. 1 zeigt zwei Ausführungsformen für erfindungsgemässe Lasertracker 10,11 und ein Messhilfsobjekt 50, dessen Position und Orientierung (6DoF = mit sechs Freiheitsgraden, drei translatorisch und drei rotatorisch) bestimmt werden soll und welches gegebenenfalls mit einem jeweiligen Messlaserstrahl 17,21 verfolgt werden soll. Das Messhilfsobjekt 50 ist hier als taktiles Messgerät ausgebildet. Der erste Lasertracker 10 weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 (Schwenkeinheit) derart an der Stütze 30 angeordnet, dass die Anzieleinheit 20 relativ zur Stütze 30 um eine Kippsachse (Neigungs- bzw. Transitachse) drehbar ist. Durch eine so um zwei Achsen bereitgestellte Ausrichtungsmöglichkeit der Anzieleinheit 20 kann ein von dieser Einheit 20 emittierter Laserstrahl 21 exakt ausgerichtet und damit Ziele angezielt werden. Dieses Ausrichten kann mittels einer Motorisierung automatisch erfolgen. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Messlaserstrahl 21 auf einen Reflektor 51 (Retroreflektor) am Messhilfsobjekt 50 gerichtet und wird an diesem zurück zum Lasertracker 10 retro-reflektiert. Mittels dieses Messlaserstrahls 21 kann eine Entfernung zum Objekt 50 bzw. zum Reflektor 51, insbesondere mittels Laufzeitmessung, mittels des Phasenmessprinzips oder mittels des Fizeau-Prinzips, bestimmt werden. Der Lasertracker 10 verfügt hierzu über eine Entfernungsmesseinheit (mit Interferometer und Absolutdistanzmesser) und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Schwenkeinheit 20, eine Bilderfassungseinheit auf. Diese Bilderfassungseinheit kann zum Zweck einer Positionsbestimmung einer Sensorbelichtung auf einem Sensor bzw. in einem erfassten Bild einen CMOS aufweisen oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsobjekt 50 einen taktilen Sensor auf, dessen Kontaktpunkt 53 mit einem zu vermessenden Zielobjekt in Kontakt gebracht werden kann. Während dieser Kontakt zwischen dem Tastwerkzeug 50 und dem Zielobjekt besteht können eine Position des

Kontaktpunktes 53 im Raum und damit die Koordinaten eines Punkts am Zielobjekt exakt bestimmt werden. Dieses Bestimmen erfolgt vermittels einer definierten relativen Positionierung des Kontaktpunkts 53 zum Reflektor 51 und zu am Messhilfsobjekt 50 angeordneten Referenzmerkmalen 52, die beispielsweise als Leuchtdioden 52 (LEDs) ausgebildet sein können. Alternativ können die Referenzmerkmale 52 auch derart ausgebildet sein, dass diese bei einem Beleuchten, z.B. mit Strahlung einer definierten Wellenlänge, die auftreffende Strahlung reflektieren (z.B. retro-reflektiv ausgebildete Markierungen 52), insbesondere eine bestimmte Leuchtcharakteristik zeigen, oder dass diese ein definiertes Muster oder Farbkodierung aufweisen. Aus der Lage bzw. Verteilung der durch die Referenzmerkmale 52 erzeugten Lichtpunkte in einem mit einem Sensor der Bilderfassungseinheit erfassten Bild kann somit eine Orientierung des Tastwerkzeugs 50 bestimmt werden.

Als Grundlage für die Bestimmung der Orientierung dient damit das erfasste Bild des Messhilfsobjekts 50 bzw. der bereitgestellten Lichtpunkte des Objekts 50. Für eine insbesondere fokussierte Erfassung der LEDs 52 mit einem optimalen und bekannten Bildmassstab verfügt der Lasertracker 10 über eine Vario-Zoom Optik, d.h. über zwei unabhängig voneinander, relativ zum Bilderfassungssensor positionierbare optische Baugruppen (z.B. Linsen).

Für diese Bestimmung verfügt der Lasertracker 10 über eine Orientierungsbestimmungsfunktionalität, die durch eine Steuerungs- und Verarbeitungseinheit des Trackers 10 ausführbar ist. Im Rahmen dieser Ausführung wird ein Bild der Referenzmerkmale 52 des Messhilfsinstrument 50 erfasst und basierend auf Bildpositionen für die im Bild erfassten Lichtpunkte mittels Bildverarbeitung die Orientierung bzw. Ausrichtung des Messhilfsobjekts 50 abgeleitet. Hierbei ist die Kamera derart ausgerichtet, dass ein Bild in Richtung des mittels des Laserstrahls 21 angezielten Objekts 50 erfassbar ist. Fernern können bei der Bilderfassung jeweils nur diejenigen Lichtquellen 52 erfasst werden, die in Abhängigkeit von der Ausrichtung des Messhilfsobjekts 50 und/oder in Abhängigkeit von Sichthindernissen von der Kamera "gesehen" werden können. Dabei können beispielsweise eine oder mehrere Leuchtdioden 52 teilweise verdeckt sein und somit im Bild nicht vollständig und entsprechend definierter Vorgaben (Berücksichtigungskriterien) abgebildet werden.

Für eine erfindungsgemässe Überprüfung der im Bild erfassten Lichtpunkte hinsichtlich eines Erfüllens eines Berücksichtigungskriteriums, welches angibt unter welchen Bedingungen ein abgebildeter Lichtpunkt 52 zur Bestimmung der Orientierung berücksichtigt wird bzw. nicht oder reduziert berücksichtigt wird, wird die durch das Erfassen eines oder mehrere Lichtpunkte 52 bereitgestellte Bildinformation (z.B. Helligkeitsverteilung im Bild für einen Lichtpunkt oder relative Lage der im Bild abgebildeten Lichtpunkte im Bild) mit dem Kriterium verglichen. Bei einem Nicht-Erfüllen des Kriterium wird der jeweils überprüfte Lichtpunkt bzw. die korrespondierende LED 52 (oder mehrere) nicht oder mit verminderter Relevanz für die Bestimmung der räumlichen Orientierung des Messhilfsobjekt 50 herangezogen.

Durch eine solche Überprüfung können zuverlässig fehlerhaft dargestellten Lichtpunkte 52 bei der Orientierungsbestimmung ausgeschlossen werden und dadurch eine genauere und robustere 6DoF-Bestimmung für das Messhilfsobjekt 50 bei Ausführen einer Messung erfolgen.

Beispielsweise kann dabei eine Helligkeitsverteilung eines einzelnen Lichtpunkts im Bild mit einer Referenzhelligkeitsverteilung für einen solchen Punkt verglichen werden und bei Vorliegen von einem vorher definierten Übereinstimmungsgrad der überprüfte Lichtpunkt bei der Orientierungsbestimmung nicht ausgeschlossen.

Ausserdem kann z.B. eine vorbekannte relative Lage der Referenzmerkmale 52 (z.B. LEDs oder retro-reflektierende Folie) am Messhilfsobjekt 50 für den Vergleich herangezogen werden. Anhand dieser bekannten relativen Lage der Referenzmerkmale 52 können dann die jeweiligen Positionen der dadurch bereitgestellten und erfassten Lichtpunkte im Bild auf deren Übereinstimmung mit durch die bekannte Lage definierten Sollpositionen im Bild verglichen und hinsichtlich des Erfüllens des Berücksichtigungskriteriums überprüft werden (= stimmen die Positionen der im Bild erfassten Lichtpunkte im Bild mit Sollpositionen, die durch die bekannte Anordnung der LEDs 52 am Messobjekt 50 gegeben sind, - z.B. innerhalb eines vordefinierten Toleranzbereichs - überein?). Wird das Berücksichtigungskriterium nicht erfüllt, so wird derjenige oder werden diejenigen Lichtpunkte für die das Nicht-Erfüllen festgestellt wurde reduziert, insbesondere nicht, für die Orientierungsbestimmung berücksichtigt.

Durch einen solchen obigen Vergleich von Berücksichtigungskriterium und Bildinformation kann auf eine teilweise Verdeckung eines oder mehrerer Referenzmerkmale 52 bei der Bilderfassung und eine dadurch verursachte fehlerhafte Abbildung der Lichtpunkte geschlossen werden. Liegt in diesem Zusammenhang die Helligkeitsverteilung für einen Lichtpunkt z.B. nicht derart vor, dass diese mit einer Sollhelligkeitsverteilung übereinstimmt, ist dies ein direkter Hinweis auf eine teilweise Verdeckung der LED 52, die den jeweiligen Lichtpunkt erzeugt. Hinsichtlich des Positionsvergleichs tritt ein Nicht-Übereinstimmen mit dem Kriterium (z.B. Sollpositionen für die abgebildeten Lichtpunkte im Bild) insbesondere dann auf, wenn der jeweilige Punkt bei der Erfassung teilweise verdeckt ist und dadurch z.B. aus einer Schwerpunktsberechnung für den Punkt eine abweichende Bildposition errechnet wird.

Die erfindungsgemässe Überprüfung kann z.B. automatisch bei einem Erfassen eines Bildes oder je nach Bedarf (d.h. beispielsweise manuell bei einer Benutzereingabe) ausgeführt werden. Ausserdem können einzelne im Bild erfasste Punkte im Bild ausgewählt werden und überprüft werden.

Der zweite Lasertracker 11 weist eine von einer Schwenkeinheit 15 (Vario-Kamera) separierte Strahlführungseinheit 16 zur Emission eines zweiten Laserstrahls 17 auf, welcher ebenfalls auf den Reflektor 51 ausgerichtet ist. Sowohl der Laserstrahl 17 als auch die Schwenkeinheit 15 sind jeweils um zwei Achsen motorisiert schwenkbar und können dadurch derart ausgerichtet werden, dass mittels der Vario-Kamera 15 das mit dem Laserstrahl 17 angezielte Ziel 51 und die LEDs 52 des Messhilfsobjekts 50 erfasst werden können. Somit können auch hier eine präzise Entfernung zum Reflektor 51 und eine Orientierung des Objekts 50 anhand der räumlichen Lage der LEDs 52 bestimmt werden.

Zur jeweiligen Ausrichtung der Laserstrahlen 17,21 auf den Reflektor 51 sind an den Lasertrackern 10,11 jeweils Beleuchtungsmittel zur Beleuchtung des Reflektors 51 mit Strahlung einer bestimmten Wellenlänge, insbesondere im infraroten Wellenlängenbereich, vorgesehen und zusätzliche zumindest eine Zielsuchkamera mit einem positionssensitiven Detektor, eine so genannte ATR-Kamera (automatic target recognition), an jedem Tracker 10,11 angeordnet. Die an dem Reflektor 51 reflektierte und zum Lasertracker 10,11 rückgestrahlte Beleuchtungsstrahlung kann jeweils mittels der Kamera detektiert und mit den positionssensitiven Detektoren kann eine Position des Reflektors 51 auf dem jeweiligen Detektor abgebildet werden. Somit kann sowohl mit dem ersten Lasertracker 10 als auch mit dem zweiten Lasertracker 11 eine abgebildete Position des Reflektors bestimmt und in Abhängigkeit dieser detektierten Suchbildpositionen das Ziel (Reflektor 51) im Bild aufgefunden und die Anzieleinheit 20 (Schwenkeinheit) bzw. die Strahlführungseinheit 16 derart ausgerichtet werden, dass das Ziel mit dem Messstrahl 17,21 automatisch angezielt wird bzw. der Laserstrahl 17,21 dem Ziel 51 automatisch (iterativ) angenähert wird. Die Lasertracker 10,11 können alternativ jeweils zumindest zwei Kameras mit jeweils einem positionssensitiven Detektor aufweisen, wobei für jeden Tracker 10,11 aus den jeweils zwei erfassten Suchbildpositionen für den Reflektor 51 jeweils beispielsweise eine Grobposition des Reflektors 51 bestimmt werden kann.

Die Entfernungsmesseinheit des jeweiligen Lasertrackers 10,11 stellt eine Entfernungsinformation zum Ziel 51 auf Basis einer Bestimmung einer relativen oder absoluten Distanz zwischen dem jeweiligen Tracker 10,11 und dem Ziel 51 und einer Bestimmung einer Änderung dieser Distanz bereit. Wird dabei die absolute Distanz insbesondere mittels Laufzeitmessung, mittels des Phasenmessprinzips oder mittels des Fizeau-Prinzips bestimmt, so wird zur Bestimmung der Distanzänderung eine Messung mit einem der jeweiligen Entfernungsmesseinheit zugeordneten Interferometer durchgeführt. Die Messstrahlung 17,21 wird derart aus dem Tracker 10,11 ausgesendet, dass diese auf das Ziel 51 trifft und an diesem rückreflektiert wird. Der reflektierte Strahl bzw. Teile des reflektierten Strahls werden dann wiederum seitens des Trackers 10,11 erfasst und entlang eines Messpfades zum Interferometerdetektor geführt, wo die Referenzstrahlung mit der empfangenen Messstrahlung 17,21 überlagert wird. Durch diese Überlagerung entsteht eine Interferenz aus den beiden Strahlungen, welche am Detektor erfasst und aufgelöst werden kann. Eine Entfernungsänderung kann z.B. durch Detektion von Maxima (konstruktive Interferenz) und Minima (destruktive Interferenz) bestimmt werden. Dabei werden insbesondere fortlaufend die detektierten Intensitätsmaxima und/oder Intensitätsminima gezählt.

Durch die Positionsbestimmung mittels Distanzmessung und die dabei vorliegende Ausrichtung des Messlaserstrahls 17 können die drei translatorischen Freiheitsgrade für das angezielte Messhilfsobjekts 50 bestimmt werden. Der Lasertracker 11 weist zudem eine Funktionalität zur Bestimmung der Orientierung des Messhilfsobjekts 50 (drei rotatorische Freiheitsgrade) auf, bei deren Ausführung ein Bild des Messhilfsobjekts 50 mit jeweils sichtbaren Referenzmerkmalen 52 erfasst wird und die räumliche Orientierung des Objekts 50 aus Bildpositionen für die im Bild erfassten Lichtpunkte der Referenzmerkmale 52 abgeleitet wird. Die Bildposition für einen Lichtpunkt wird hierfür beispielsweise aus einer Schwerpunktberechnung basierend auf einer Helligkeitsverteilung oder basierend auf einem Kontrast für den jeweiligen Lichtpunkt bestimmt. Die Bestimmung der Bildposition für einen Lichtpunkt hängt insbesondere von der im Bild erfassten Erscheinung des jeweiligen Lichtpunkts ab. Ist der Punkt bei der Bilderfassung vollständig und gut sichtbar, so wird dieser typischerweise so im Bild erfasst, dass Bildattribute, die dem im Bild erfassten Punkt im Bild zugeordnet werden können, derart ausgeprägt sind, dass diese mit Ausprägungen für entsprechende Sollattribute übereinstimmen bzw. innerhalb eines Akzeptanzbereichs für diese Sollattribute liegen, d.h. das Referenzmerkmal 52 wird im Bild als Lichtpunkt wie erwartet abgebildet.

Ist das Referenzmerkmal 52 (LED) jedoch beim Bilderfassen teilweise verdeckt bzw. befindet sich das Messhilfsobjekt 50 in einer Ausrichtung, in der die Emissionsrichtung der LED 52 (die den Lichtpunkt erzeugt) in einem ungünstigen Winkel relativ zur Kamera steht (z.B. > 90°), so wird dieser Lichtpunkt 52 im Bild mit nicht erwartungsgemässen Bildattributen erfasst, d.h. dass beispielsweise die so erfasste Helligkeitsverteilung nicht mit einer Verteilung für einen entsprechend frontal und vollständig erfassten Lichtpunkt (im Rahmen eines Toleranzbereichs) übereinstimmt. Mit solchen verfälschten Bildeigenschaften für einen Lichtpunkt folgt aus der Schwerpunktberechnung bzw. aus der Bestimmung der korrespondierenden Bildposition eine von einem Sollwert abweichende Position im Bild.

Bei einer Orientierungsbestimmung mittels der vorgesehenen Funktionalität basierend auch auf einer derartig fehlerbehafteten Bildposition für zumindest einen Punkt würde dann eine Orientierung für das Messhilfsobjekt 50 ebenfalls mit einem Fehler bestimmt werden.

Zur Verringerung bzw. Vermeidung einer solchen fehlerhaften Orientierungsbestimmung weist der Lasertracker 11 zudem eine erfindungsgemässe Überprüfungsfunktionalität auf, bei deren Ausführung (durch eine Steuerungs- und Verarbeitungseinheit des Trackers 11) zumindest ein im Bild erfasster Lichtpunkt hinsichtlich eines Erfüllens eines Berücksichtigungskriteriums überprüft wird. Bei einem Nicht-Erfüllen dieses Kriteriums wird der mindestens eine überprüfte Lichtpunkt reduziert gewichtet für die Ableitung der Orientierung des Messhilfsobjekts 50 berücksichtigt. Somit können fehlerhaft abgebildete Referenzmerkmale 52 bzw. der durch das jeweilige Merkmal 52 bereitgestellte Lichtpunkt gefiltert und in Folge ein Fehler bei der Orientierungsbestimmung insbesondere vermieden werden.

Das Berücksichtigungskriterium kann in diesem Zusammenhang beispielsweise eine Sollform und/oder räumliche Sollausdehnung und/oder eine Sollhelligkeitsverteilung und/oder eine Sollsummenintensität (bezüglich der Lichtintensität) und/oder einen Sollkontrast für einen Lichtpunkt 52 als Bildreferenz angeben oder eine relative räumliche Sollpositionierung der Bildpositionen im Bild für die Anzahl der im Bild erfassten Lichtpunkte definieren.

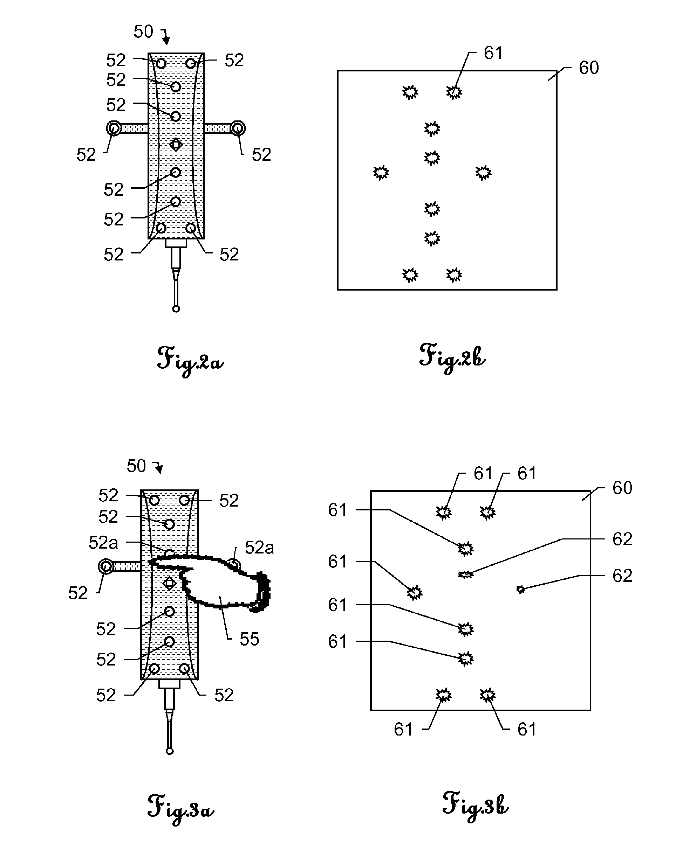

Die Fig. 2a und 2b zeigen ein Messhilfsobjekt 50 (Fig.2a) und ein Bild 60, in dem Lichtpunkte 61 erfasst sind (Fig.2b), die durch die LEDs 52 am Messhilfsobjekt 50 bereitgestellt werden. Eine Kameraeinheit, mit der das Bild 60 erfasst ist, kann insbesondere ein wellenlängenselektives Filter zur im Wesentlichen ausschliesslichen Erfassung einer Emissionswellenlänge der LEDs 52 bzw. einer Beleuchtungswellenlänge für reflektierende Referenzmerkmale aufweisen. Dadurch kann beispielsweise ein Einfluss von Streustrahlung vermieden und die Qualität der Abbildung der Lichtpunkte verbessert werden.

Gemäss der hier gezeigten frontalen Ausrichtung des Messhilfsobjekt 50 relativ zu einer bilderfassenden Kamera, sind die Lichtpunkte 61 im Bild 60 optimal abgebildet und entsprechen jeweils einer Sollabbildung für derartige LEDs 52. Bei einer erfindungsgemässen Überprüfung dieser erfassten Lichtpunkte 61 würden demnach alle abgebildeten Lichtpunkte 61 als das Berücksichtigungskriterium erfüllend betrachtet und keiner der Punkte 61 als nicht-zuberücksichtigen identifiziert werden. Basierend auf diesen im Bild 60 erfassten Lichtpunkte 61 kann dann für jeden Lichtpunkt 61 eine Bildposition - mittels Bildverarbeitung - bestimmt werden. Aus den Bildpositionen und aus einer bekannten relativen Anordnung der LEDs 52 am Messhilfsobjekt 50 (und einer somit bekannten relativen Sollpositionierung der Lichtpunkte 61 im Bild 60) kann eine räumliche Orientierung des Messhilfsobjekts 50 abgeleitet werden.

Fig.3a zeigt ein Messhilfsobjekt 50 mit an definierten Positionen angeordneten Referenzmerkmalen 52,52a, wobei die Referenzmerkmale 52a jeweils durch ein Hindernis 55 (hier z.B. eine Hand eines Benutzers) teilweise verdeckt sind. Fig.3b zeigt ein Bild 60 mit zu den Referenzmerkmalen 52,52a korrespondierenden erfassten Lichtpunkten 61,62. Die Lichtpunkte 61 repräsentieren dabei jeweils ein Abbild der vollständig sichtbaren Referenzmerkmale 52. Die Lichtpunkte 62 hingegen stellen jeweils ein Abbild der teilverdeckten Referenzmerkmale 52a im Bild 60 dar.

Bei einer Bestimmung der räumlichen Orientierung des Messhilfsobjekts 50 basierend auf den Lichtpunkten 61,62 kann aufgrund der nicht vollständig und nicht erwartungsgemäss abgebildeten Lichtpunkte 62 eine Orientierung mit einem gewissen Fehler bestimmt werden. Dies resultiert aus der Bildpositionsbestimmung für die Lichtpunkte 62, wobei bei einer Schwerpunktsberechnung zur Bestimmung der Bildpositionen die Helligkeitsverteilung für die nicht vollständig abgebildeten Referenzmerkmale 52 herangezogen wird.

Zur Reduzierung des Auftretens solcher Fehler, bzw. zu deren Vermeidung, werden im Rahmen des erfindungsgemässen Verfahrens die Lichtpunkte 61,62 auf das Erfüllen eines Berücksichtigungskriteriums hin (insbesondere zur Berücksichtigung für die Orientierungsbestimmung) überprüft. Hierzu wird eine durch das erfasste Bild und die darin erfassten Lichtpunkte 61,62 vorliegende Information, z.B. eine Helligkeitsverteilung für einen Lichtpunkt oder eine relative räumlich Beziehung der Lichtpunkte 61,62, mit dem Berücksichtigungskriterium, z.B. eine Sollhelligkeitsverteilung für einen Lichtpunkt (lokales Berücksichtigungskriterium) oder eine definierte relative räumliche Sollbeziehung der Lichtpunkte 61,62 bzw. der Referenzmerkmale 52,52a (globales Berücksichtigungskriterium), verglichen. Stimmt dabei die Information mit dem Berücksichtigungskriterium, insbesondere im Rahmen eines vordefinierten Toleranzbereichs, überein so wird der jeweils überprüfte Lichtpunkt zur Orientierungsbestimmung berücksichtigt bzw. wird bei einem Nicht-Übereinstimmen der Lichtpunkt reduziert gewichtet.

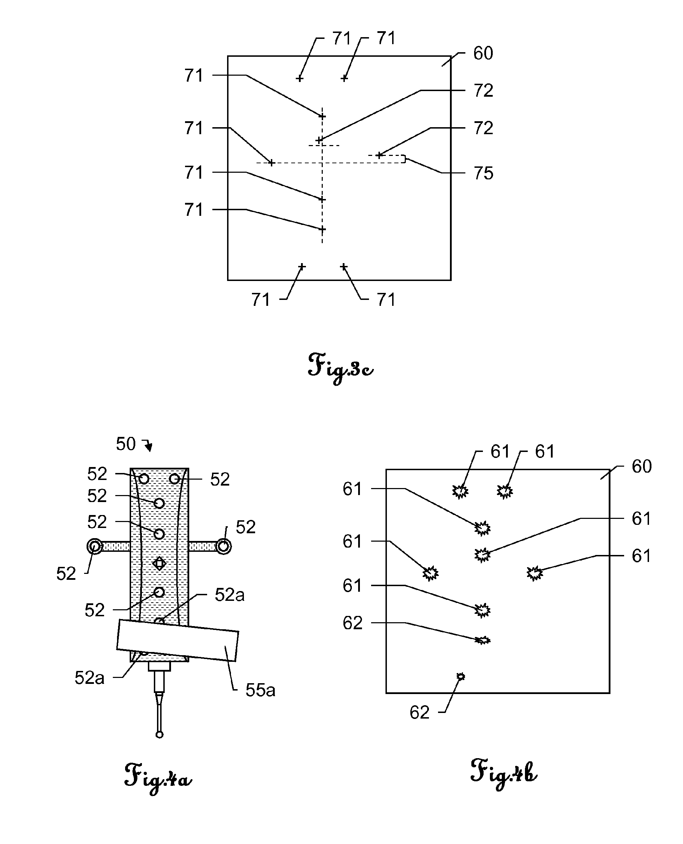

Gemäss einer in Fig.3c gezeigten Ausführungsform wird basierend auf der bekannten relativen räumlichen Anordnung der LEDs 52 berechnet, wo auf dem Bildsensor (bzw. im Bild 60) die Abbildungen der LEDs 52 erscheinen müssten. Eine Abweichung 75 von einer vorhergesagten Bildkoordinate für einen Lichtpunkt 62 kann als Indikator für eine teilweise Abdeckung der korrespondierenden LED 52a sein. Da die Bildkoordinaten 72 für die Lichtpunkte 62 aufgrund teilweiser Verdeckungen der LEDs 52a verändert sind, wird dadurch die äussere räumliche Orientierung systematisch verfälscht.

Im Rahmen einer erfindungsgemässen Überprüfung kann ein bekannter Ausreissertest auf Residuen der Bildkoordinaten 71,72 nach der Berechnung eines ersten Rückwärtsschnitts angewendet werden. Mit dem Ergebnis einer ersten Berechnung unter Verwendung aller LED-Abbilder 61,62 werden für alle Bildkoordinaten 71,72 die Residuen berechnet. Anschliessend wird geprüft, ob das bzw. die grössten Residuen noch innerhalb einer zufälligen Verteilung (z.B. Normal- oder t-Verteilung) liegen. Der Vertrauensbereich kann dabei beispielsweise je nach Erfahrung oder gewünschter Sensitivität festgelegt werden. Anschliessend wird der Rückwärtsschnitt ohne allfällig identifizierte Ausreisser wiederholt, d.h. der jeweilige Lichtpunkt 62 wir nicht für die Bestimmung der räumlichen Orientierung des Messhilfsobjekts 50 berücksichtigt.

Fig.4a zeigt ein Messhilfsobjekt 50 mit an definierten Positionen angeordneten Referenzmerkmalen 52,52a gemäss Fig.3a, wobei hier die Referenzmerkmale 52a jeweils durch ein strukturelles Hindernis 55a (z.B. ein Teil eines Roboterarms) teilweise verdeckt sind und ein weiteres Referenzmerkmale völlig verdeckt ist. Fig.4b zeigt ein entsprechendes Bild 60 mit erfassten Lichtpunkten 61,62 (für die jeweiligen Referenzmerkmale 52,52a). Die Lichtpunkte 61 repräsentieren dabei jeweils ein Abbild der vollständig sichtbaren Referenzmerkmale 52. Die Lichtpunkte 62 hingegen stellen jeweils ein Abbild der teilverdeckten Referenzmerkmale 52a im Bild 60 dar. Das totalverdeckte Merkmal des Objekts 50 ist im Bild 60 nicht erfasst. Ein erfindungsgemässes Überprüfen der im Bild 60 erfassten Lichtpunkte 61,62 kann analog zu oben beschriebener Überprüfung hinsichtlich des Erfüllens eines Berücksichtigungskriteriums erfolgen.

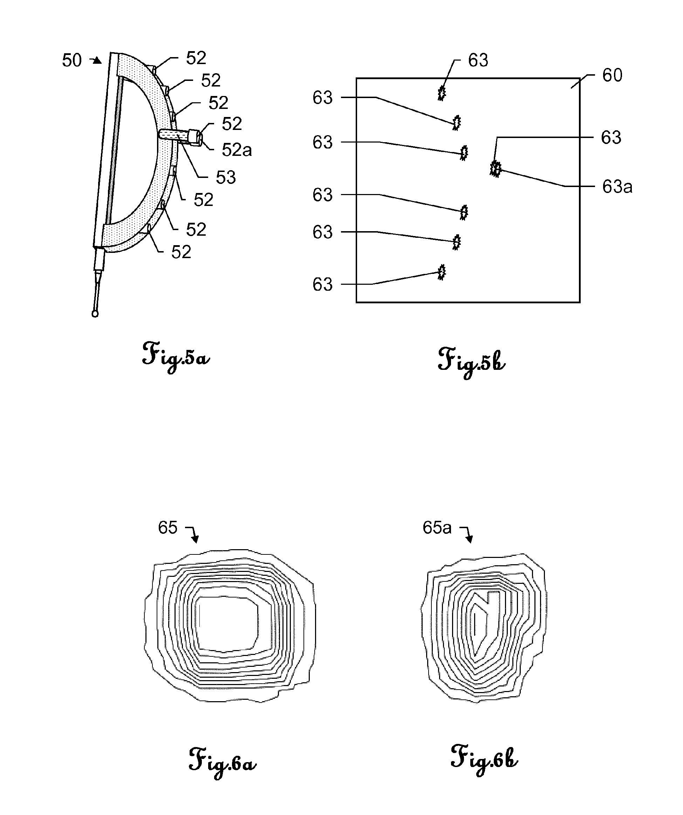

Fig.5a zeigt eine Messhilfsinstrument 50 mit in bekannter räumlicher Beziehung angeordneten LEDs 52 in einer seitlichen Ausrichtung relativ zu einer Kamera, mit der das Messhilfsinstrument 50 erfasst wird. Fig.5b zeigt ein Bild 60 mit erfassten Lichtpunkten 63 für die LEDs 52 korrespondierend zur seitlichen Ausrichtung des Instruments 50. In einer solchen Ausrichtung werden die Lichtpunkte 63 für die LEDs 52 verzerrt auf den Bildsensor abgebildet, sodass die einzelnen Lichtpunkte 63 nicht einer erwarteten vollständigen Abbildung der jeweiligen LED 52 entsprechen. Zudem ist die LED 52a durch die Struktur 53 teilweise verdeckt, wodurch der korrespondierende Lichtpunkt 63a verzerrt und zudem unvollständig abgebildet ist.

Jedoch kann im Rahmen einer erfindungsgemässen Überprüfung aus dem Bild 60 eine räumliche Beziehung der im Bild 60 erfassten Lichtpunkte 63 abgeleitet werden und eine positive Übereinstimmung dieser räumlichen Beziehung im Bild 60 mit der bekannten räumlichen Anordnung der LEDs 52 am Instrument 50 festgestellt werden, woraus eine Erfüllung des Berücksichtigungskriteriums festgestellt werden kann. Hierzu sind insbesondere in einer Datenbank eines Lasertrackers mit entsprechenden erfindungsgemässen Funktionalitäten zu jeweiligen Ausrichtungen des Messhilfsinstruments 50 jeweilige Sollwerte für das Erscheinen der Lichtpunkte 63 in dem erfassten Bild 60 hinterlegt.

Ferner können in der Datenbank oder der Steuerungs- und Verarbeitungseinheit eine strukturelle Ausgestaltung 53 des Messhilfsinstruments 50, die eine Sichtbarkeit einzelner oder mehrerer LEDs 52 - insbesondere je nach Ausrichtung des Messhilfsinstruments 50 - beinträchtigen kann, und/oder eines Struktur eines Messraums gespeichert sein, wobei diese Strukturen bei der Überprüfung des Erfüllens des Berücksichtigungskriteriums berücksichtig werden können.

Die Fig. 6a-b zeigen jeweils einen Konturplot 65,65a für eine Helligkeitsverteilung des Abbildes einer quadratischen LED. In Fig.6a ist der Konturplot 65 für die erfasste LED ohne eine teilweise Verdeckung der LED durch ein Hindernis gezeigt. Eine derartige Helligkeitsverteilung 65 kann zum einen im System (Steuerungs- und Verarbeitungseinheit eines Lasertrackers) als Referenz bzw. als zu erfüllendes Berücksichtigungskriterium hinterlegt sein und als Vergleichsbild für Abbildungen von LEDs im Bild herangezogen werden. Zum anderen ist für eine entsprechend abgebildete LED bei Ausführung einer Überprüfung des Erfüllens eines hinsichtlich der Helligkeitsverteilung gegebenen Berücksichtigungskriteriums ein grosser Übereinstimmungsgrad und damit die Berücksichtigung des Lichtpunkts für die Bestimmung einer Orientierung eines Messhilfsinstruments festzustellen.

Fig.6b zeigt einen Konturplot 65a für die Helligkeitsverteilung eines Abbilds der identischen (bezüglich Fig.6a) quadratischen LED, wobei diese von links teilweise verdeckt ist. Verursacht durch die teilweise Verdeckung der LED unterscheidet sich diese Helligkeitsverteilung 65a in ihrer räumlichen Ausdehnung und Form von einer Verteilung für eine unverdeckte Abbildung der LED gemäss Fig.6a. Bei Ausführung der erfindungsgemässen Überprüfungsfunktionalität (wobei der diese Verteilung erzeugende teilverdeckte Lichtpunkt überprüft wird) wird für diesen Lichtpunkt 65a ein Nicht-Erfüllen des eine Sollhelligkeitsverteilung für derartige LEDs angebenden Berücksichtigungskriteriums festgestellt und dieser Lichtpunkt somit für die Orientierungsbestimmung nicht oder nur reduziert gewichtet berücksichtig.

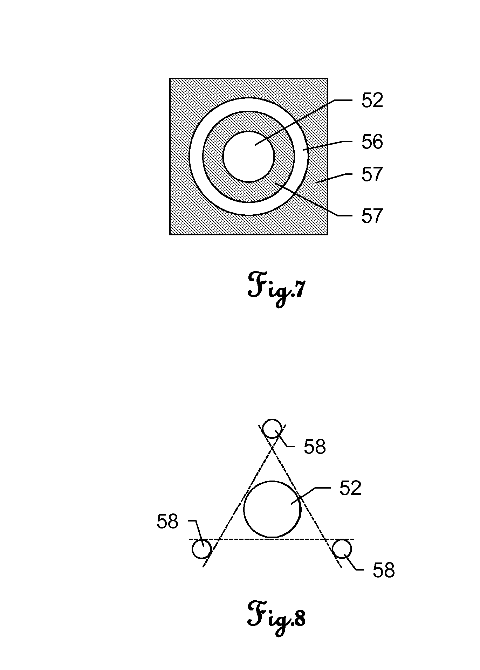

Fig.7 zeigt eine erste erfindungsgemässe Ausführungsform für eine Messzielmarke bzw. eine LED 52 mit einer Hilfsmarkierung 56 an einem Messhilfsobjekt zur Detektion einer potentiellen teilweisen Abdeckung der LED 52. Die Hilfsmarkierung 56 ist hierbei ringförmig um die LED 52 ausgebildet, wobei diese Hilfsmarkierung 56 als retro-reflektierende Folie oder als LED verkörpert sein kann und/oder anstelle der LED 52 eine passive retro-reflektierende Folie vorgesehen sein kann. Die Position der Messzielmarke bzw. der LED 52 wird zur Berechnung eines räumlichen Rückwärtsschnitts zur Bestimmung der Orientierung des Messhilfsobjekts verwendet. Wird die ringförmige Hilfsmarkierung 56 auf dem Bildsensor nicht geschlossen abgebildet, ist dies ein Indiz dafür, dass die Messzielmarke 52 (bzw. LED) teilweise verdeckt ist.

Zur Erhöhung des Kontrasts in einem erfassten Bild mit der Hilfsmarkierung 56 ist eine dunkle Maskierung um die Hilfsmarkierung 56 und zwischen der Hilfsmarkierung 56 und der LED 52 vorgesehen.

Fig.8 zeigt eine zweite erfindungsgemässe Ausführungsform für eine Mess-LED 52 mit Hilfsmarkierungen bzw. Hilfs-LEDs 58 an einem Messhilfsobjekt zur Detektion einer potentiellen teilweisen Abdeckung der Mess-LED 52. Gemäss der gezeigten Ausführungsform sind drei Hilfs-LEDs 58 um die Mess-LED 52 platziert. Werden eine oder zwei der Hilfs-LEDs 58 nicht auf einem Bildsensor abgebildet, ist dies wiederum ein typisches Indiz für eine teilweise Verdeckung der Mess-LED 52. Die Hilfs-LEDs sind dabei so positioniert, dass damit eine teilweise Abdeckung, egal aus welcher Richtung zuverlässig detektiert werden kann. Je nach Abbildungsqualität der Kameraoptik und des Bildsensors kann für diese Positionierung der Hilfs-LEDs 58 ein individueller "Sicherheitsabstand" zur Mess-LED 52 eingeplant sein.

Für eine Überprüfung, ob die ringförmige Hilfsmarkierung 56 gemäss Fig.7 und/oder die Hilfs-LEDs 58 gemäss Fig.8 abgedeckt sind kann gemäss einer speziellen Ausführungsform ein erfindungsgemässes Überprüfungsverfahren bzw. eine Überprüfungsfunktionalität zum Vergleichen einer die Hilfsmarkierung 56 und/oder die Hilfs-LEDs 58 betreffenden Bildinformation mit einem Berücksichtigungskriterium ausgeführt werden. Das Berücksichtigungskriterium ist hierfür insbesondere speziell auf die Gestalt und/oder die Anordnung der Hilfsmarkierung 56 und/oder der Hilfs-LEDs 58 abgestimmt.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zur Abbildung von Objekten bzw. mit Verfahren zur Orientierungsbestimmung von Objekten und mit gattungsgemässen Messgeräten, insbesondere Lasertrackern, des Stands der Technik kombiniert werden.

## Patentansprüche

1. Verfahren zum Bestimmen einer räumlichen Orientierung eines in definierter räumlicher Beziehung angebrachte und Lichtpunkte (61,62,63) bereitstellende Referenzmerkmale (52,52a) aufweisenden Messhilfsobjekts (50) für und mit einem Lasertracker (10,11) mit
● einer eine Stehachse (41) definierenden Basis (40),
● einer relativ zur Basis (40) um die Stehachse (41) motorisiert schwenkbaren Stütze (30),
● einer relativ zur Stütze (30) um eine Kippachse motorisiert drehbaren Schwenkeinheit (15,20) mit einer Bilderfassungseinheit zum Erfassen eines Bildes (60) der Lichtpunkte (61,62,63),
● einer Strahlquelle zur Emission eines Laserstrahls (17,21),
● einer Entfernungsmesseinheit zum Distanzmessen zum Messhilfsobjekt (50) vermittels des Laserstrahls (17,21) und
● einer Winkelmessfunktionalität zum Bestimmen einer Emissionsrichtung des Laserstrahls (17,21) relativ zur Basis (40),
wobei im Rahmen des Verfahrens
● ein Bild (60) in Richtung des Messhilfsobjekts (50) mit jeweils in Abhängigkeit von zumindest einer Position und/oder von einer Ausrichtung des Messhilfsobjekts (50) erfassbaren Lichtpunkten (61,62,63) erfasst wird und
● die räumliche Orientierung des Messhilfsobjekts (50) aus Bildpositionen (71,72) im Bild (60) für die im Bild (60) erfassten Lichtpunkte (61,62,63) mittels Bildauswerten abgeleitet wird,
**dadurch gekennzeichnet, dass**
● ein lokales Berücksichtigungskriterium bezüglich eines Aussehens eines einzelnen Lichtpunkts (61,62,63) im Bild (60) für das Bildauswerten definiert ist oder ein globales Berücksichtigungskriterium hinsichtlich einer positionellen Beziehung zwischen einer Anzahl von Lichtpunkten (61,62,63) im Bild (60) für das Bildauswerten definiert ist,
● ein Überprüfen eines Erfüllens des lokalen bzw. globalen Berücksichtigungskriteriums für mindestens einen der im Bild (60) erfassten Lichtpunkte (61,62,63) erfolgt und
● bei einem Nicht-Erfüllen des Berücksichtigungskriteriums der mindestens eine der im Bild (60) erfassten Lichtpunkte (61,62,63) für das Ableiten der räumlichen Orientierung reduziert gewichtet, insbesondere ausgeschlossen, wird.

2. Verfahren nach Anspruch 1,
**dadurch gekennzeichnet, dass**
das lokale Berücksichtigungskriterium ein Bildattribut für das Erscheinen mindestens des einen der Lichtpunkte (61,62,63) im Bild (60) definiert, insbesondere eine Sollform und/oder räumliche Sollausdehnung und/oder eine Sollhelligkeitsverteilung (65) und/oder eine Sollsummenintensität und/oder einen Sollkontrast als Bildreferenz definiert.

3. Verfahren nach Anspruch 1 oder 2,
**dadurch gekennzeichnet, dass**
das globale Berücksichtigungskriterium eine relative räumliche Sollpositionierung der Bildpositionen (71) im Bild (70) für die Anzahl der im Bild erfassten Lichtpunkte (61,62,63) definiert, insbesondere unter Berücksichtigung von einer jeweiligen Orientierung des Messhilfsobjekts (50).

4. Verfahren nach einem der Ansprüche 1 bis 3,
**dadurch gekennzeichnet, dass**
das lokale bzw. globale Berücksichtigungskriterium aus dem erfassten Bild (60) abgeleitet wird, insbesondere aus jeweiligen grafischen Abbildungen der Lichtpunkte (61,62,63) im Bild (60), insbesondere aus einem Vergleich der jeweiligen grafischen Abbildungen der Lichtpunkte (61,62,63).

5. Verfahren nach einem der Ansprüche 1 bis 4,
**dadurch gekennzeichnet, dass**
zeitlich versetzt mindestens ein weiteres Bild (60) mit den Lichtpunkten (61,62,63) erfasst wird, insbesondere fortlaufend mehrere Bilder erfasst werden, und das Überprüfen des Erfüllens des lokalen bzw. globalen Berücksichtigungskriteriums für mindestens den einen in den Bildern (60) erfassten Lichtpunkt (61,62,63) durch ein Vergleichen der Bilder erfolgt, insbesondere durch ein Vergleichen des Aussehens des einzelnen Lichtpunkts (61,62,63) in den Bildern (60) oder durch ein Vergleichen der jeweiligen Bildposition (71,72) für den einzelnen Lichtpunkt (61,62,63) in den Bildern erfolgt.

6. Verfahren nach einem der Ansprüche 1 bis 5,
**dadurch gekennzeichnet, dass**
● für das Überprüfen des Erfüllens des lokalen Berücksichtigungskriteriums eine grafische Information für den mindestens einen der im Bild (60) erfassten Lichtpunkte (61,62,63) aus dem Bild (60) abgeleitet wird, insbesondere eine für den Lichtpunkt (61,62,63) im Bild (60) erfasste Istform und/oder räumliche Istausdehnung und/oder eine Isthelligkeitsverteilung (65,65a) und/oder eine Istsummenintensität und/oder einen Istkontrast oder
● für das Überprüfen des Erfüllens des globalen Berücksichtigungskriteriums eine mittels Bildverarbeiten bestimmte Bildposition (71,72) für den mindestens einen der im Bild (60) erfassten Lichtpunkte (61,62,63) im Bild (60) herangezogen wird, insbesondere wobei die Bildposition (71,72) mittels Schwerpunktsberechnung im Bild (60) basierend auf einer Helligkeitsverteilung (65,65a) bestimmt wird.

7. Verfahren nach einem der Ansprüche 1 bis 6,
**dadurch gekennzeichnet, dass**
bei dem Überprüfen des Erfüllens des lokalen bzw. globalen Berücksichtigungskriteriums eine räumliche Struktur des Messhilfsobjekts (50) und/oder eines Messraums sowie insbesondere eine Position des Messhilfsobjekts (50) berücksichtigt wird, insbesondere wobei eine Position und Dimensionierung eines Sichthindernisses (53,55) berücksichtigt werden.

8. Verfahren nach einem der Ansprüche 1 bis 7,
**dadurch gekennzeichnet, dass**
aus dem Überprüfen des Erfüllens des lokalen bzw. globalen Berücksichtigungskriteriums eine zumindest teilweise Verdeckung für mindestens den einen der im Bild (60) erfassten Lichtpunkte (61,62,63) bestimmt wird, wobei bei Vorliegen einer zumindest teilweisen Verdeckung des Lichtpunkts (61,62,63) dieser Lichtpunkt (61,62,63) für das Ableiten der räumlichen Orientierung reduziert gewichtet wird.

9. Verfahren nach einem der Ansprüche 1 bis 8,
**dadurch gekennzeichnet, dass**
für das Überprüfen des Erfüllens des lokalen bzw. globalen Berücksichtigungskriteriums ein einen Übereinstimmungsgrad von Berücksichtigungskriterium und einer Bildinformation angebender Vergleichsgütewert ermittelt wird und für den Vergleichsgütewert ein Vertrauensbereich definiert ist, wobei die Bildinformation für mindestens den ersten Lichtpunkt (61,62,63) aus dem erfassten Bild abgeleitet wird, insbesondere wobei
bei einem Vorliegen eines aktuell bestimmten Vergleichsgütewerts im Rahmen des Überprüfens des Erfüllens des lokalen bzw. globalen Berücksichtigungskriteriums für den mindestens einen der erfassten Lichtpunkte (61,62,63) innerhalb des Vertrauensbereichs ein Berücksichtigen und bei einem Vorliegen des bestimmten Vergleichsgütewerts ausserhalb des Vertrauensbereichs ein reduziertes Gewichten des Lichtpunkts (61,62,63) für das Ableiten der räumlichen Orientierung erfolgt.

10. Verfahren nach Anspruch 9,
**dadurch gekennzeichnet, dass**
bei dem Überprüfen des Erfüllens des lokalen bzw. globalen Berücksichtigungskriteriums für jeden der im Bild erfassten Lichtpunkte (61,62,63) ein individuelles Residuum bestimmt wird und überprüft wird, ob die jeweiligen Residuen innerhalb eines einstellbaren Erwartungsbereichs liegen, wobei bei Vorliegen eines oder mehrerer Residuen ausserhalb des Erwartungsbereichs der bzw. die korrespondierenden Lichtpunkte (61,62,63) für das Ermitteln des Vergleichsgütewert reduziert gewichtet werden, insbesondere für das Ableiten der räumlichen Orientierung ausgeschlossen werden.

11. Lasertracker (10,11) zur Positions- und/oder Ausrichtungsbestimmung eines in definierter räumlicher Beziehung angebrachte und Lichtpunkte (61,62,63) bereitstellende Referenzmerkmale (52,52a) aufweisenden Messhilfsobjekts (50) und insbesondere zur fortlaufenden Verfolgung des Messhilfsobjekts (50), aufweisend
● eine eine Stehachse (41) definierende Basis (40),
● eine relativ zur Basis (40) um die Stehachse (41) motorisiert schwenkbare Stütze (30),
● eine relativ zur Stütze (30) um eine Kippachse motorisiert drehbare Schwenkeinheit (15,20) mit einer Bilderfassungseinheit zur Erfassung eines Bildes (60) der Lichtpunkte (61,62,63),
● eine Strahlquelle zur Emission eines Laserstrahls (17,21),
● eine Entfernungsmesseinheit zur Distanzmessung zum Messhilfsobjekt (50) vermittels des Laserstrahls (17,21),
● eine Winkelmessfunktionalität zur Bestimmung einer Emissionsrichtung des Laserstrahls (17,21) relativ zur Basis (40) und
● eine Steuerungs- und Verarbeitungseinheit mit einer Funktionalität zum Bestimmen einer räumlichen Orientierung des Messhilfsobjekts (50), bei deren Ausführung die räumliche Orientierung des Messhilfsobjekts (50) aus Bildpositionen (71,72) im Bild (60) für im Bild (60) erfasste Lichtpunkte (61,62,63) mittels Bildauswertung abgeleitet wird, wobei gesteuert durch die Steuerungs- und Verarbeitungseinheit das Bild (60) in Richtung des Messhilfsobjekts (50) mit jeweils in Abhängigkeit von zumindest einer Position und/oder von einer Ausrichtung des Messhilfsobjekts (50) erfassbaren Lichtpunkten (61,62,63) erfasst ist,
**dadurch gekennzeichnet, dass**
● ein lokales Berücksichtigungskriterium bezüglich eines Aussehens eines einzelnen Lichtpunkts (61,62,63) im Bild (60) für die Bildauswertung definiert ist oder ein globales Berücksichtigungskriterium hinsichtlich einer positionellen Beziehung zwischen einer Anzahl von Lichtpunkten (61,62,63) im Bild (60) für die Bildauswertung definiert ist,
● die Steuerungs- und Verarbeitungseinheit eine Überprüfungsfunktionalität aufweist, bei deren Ausführung für mindestens einen der im Bild (60) erfassten Lichtpunkte (61,62,63) ein Überprüfen eines Erfüllens des lokalen bzw. globalen Berücksichtigungskriteriums erfolgt, und
● bei einem Nicht-Erfüllen des Berücksichtigungskriteriums der mindestens eine der im Bild (60) erfassten Lichtpunkte (61,62,63) bei Ausführung der Funktionalität für das Ableiten der räumlichen Orientierung reduziert gewichtet, insbesondere ausgeschlossen, wird.

12. Lasertracker (10,11) nach Anspruch 11,
**dadurch gekennzeichnet, dass**
die Steuerungs- und Verarbeitungseinheit zur Ausführung eines Verfahrens nach einem der Ansprüche 1 bis 10 ausgebildet ist.

13. Lasertracker (10,11) nach Anspruch 11 oder 12,
**dadurch gekennzeichnet, dass**
das Messhilfsobjekt (50) derart ausgebildet ist, dass zusätzliche Hilfsmarkierungen (56,58) angeordnet sind, die in einer definierten räumlichen Beziehung zu einem der Referenzmerkmale (52,52a) positioniert sind, wobei bei Ausführung der Überprüfungsfunktionalität Abbilder der Hilfsmarkierungen (56,58) im erfassten Bild (60) hinsichtlich des Erfüllens des lokalen bzw. globalen Berücksichtigungskriteriums überprüft werden, insbesondere wobei die Hilfsmarkierungen (56,58) als Leuchtdioden ausgebildet sind.

14. Lasertracker (10,11) nach einem der Ansprüche 11 bis 13,
**dadurch gekennzeichnet, dass**
die Referenzmerkmale (52,52a) des Messhilfsobjekts (50) als selbstleuchtende Mittel, die die Lichtpunkte (61,62,63) bereitstellen, ausgebildet sind, insbesondere als Leuchtdioden.

15. Computerprogrammprodukt, das auf einem maschinenlesbaren Träger gespeichert ist, zur Steuerung des Bilderfassens in Richtung des Messhilfsobjekts (50) und zur Ausführung
● der Bestimmung der räumlichen Orientierung des Messhilfsobjekts (50) und
● des Überprüfens des Erfüllens des Berücksichtigungskriteriums
eines Verfahrens nach einem der Ansprüche 1 bis 10, insbesondere wenn das Computerprogrammprodukt auf einer Steuerungs- und Verarbeitungseinheit eines Lasertrackers (10,11) nach einem der Ansprüche 11 bis 14 ausgeführt wird.
